# EUROPEAN PATENT SPECIFICATION

(11) **EP 1 944 505 B1**
(45) Date of publication and mention of the grant of the patent: **28.11.2012**
(21) Application number: 07000617.6
(22) Date of filing: 12.01.2007
(51) Int. Cl.: F03D 1/06

(54) **Wind turbine rotor blade with vortex generators**
Windturbinenrotorblatt mit Wirbelerzeugern
Aube de rotor d'éolienne avec générateurs de tourbillons

(43) Date of publication of application: 16.07.2008
(73) Proprietor: SIEMENS AKTIENGESELLSCHAFT, 80333 München (DE)
(72) Inventor: Enevoldsen, Peder Bay, 7100 Vejle (DK); Hjort, Soeren, 7330 Brande (DK)

(56) References cited:
- EP-A- 1 674 723
- WO-A-00/15961
- WO-A-2006/122547
- VAN ROOIJ, R.P.J.O.M.; TIMMER, W.A.: "Roughness sensitivity considerations for thick rotor blade airfoils" JOURNAL OF SOLAR ENERGY ENGINEERING, vol. 125, no. 4, November 2003 (2003-11), pages 468-478, XP008079790 New York, NY, US
- PETER FUGLSANG, CHRISTIAN BAK: "Development of the Risø wind turbine airfoils" A SAMPLING OF THE 2003 EWEC IN MADRID, vol. 7, no. 2, 24 May 2004 (2004-05-24), pages 145-162, XP002436915 John Wiley & Sons Ltd.

## Description

The present invention relates to a wind turbine rotor blade with vortex generators and to a wind turbine with at least one of such rotor blades.

A state of the art rotor blade for a wind turbine is, e.g. described in EP 1 314 885 A1. Such a blade comprises a root portion having a cylindrically shaped cross-section by which the rotor blade is fixed a hub of the rotor and an airfoil portion with an aerodynamically shaped cross-section.

It is usual to subdivide the airfoil portion notionally into a relatively thick inner airfoil portion and a relatively thin outer airfoil portion where the inner airfoil portion is located between the root portion and the outer airfoil portion.

The wind turbine rotor blade disclosed in EP 1 314 885 A1 is provided with vortex generators located at the suction side of the inner airfoil portion.

Vortex generators which are located on a wind turbine rotor blade close to the hub portion are also known from WO 02/08600 A1. In addition, the use of vortex generators is described in WO 00/15961 as well as in EP 0 947 693 A2.

In Van Rooij, R.P.J.O.M.; Timmer, W.A.: "Roughness sensitivity considerations for thick rotor blade airfoils", Journal of Solar Energy Engineering, vol. 125, no. 4, November 2003 (2003-11), pages 468-478, XP00807970 New York, NY, US and in Peter Fuglsang, Christian Bak: "Development of the Risø Wind Turbine Airfoils" A Sampling of the 2003 EWEC in Madrid, vol. 7, no. 2, 24 May 2004 (2004-05-24), pages 145-162, XP002436915 John Wiley & Sons Ltd., different wind turbine rotor blades having a thickness between 25% and 40.1% as compared to the chord length are described. The rotor blades are equipped with vortex generators, which are located at the airfoil's suction side at 20% or 30% of the chord length, as measured from the leading edge of the airfoil.

In the mentioned state of the art, the use of vortex generators for improving the aerodynamical properties of the wind turbine rotor blades is described. However, an optimum position of the vortex generators depends on many parameters. Therefore, a good position of vortex generators at the outer airfoil portion of a rotor blade cannot necessarily be expected to be also a good position of the vortex generators at the inner airfoil portion of the rotor blade. However, in particular the inner airfoil portion of the rotor blade has a reduced aerodynamic performance as compared to the outer airfoil portion. The reason is that the inner part of the wind turbine rotor blade needs to carry the load from the entire blade. This means a number of design constrains in order to achieve sufficient stiffness of the rotor blade. The reduced aerodynamic performance of the inner airfoil portion compared to the outer airfoil portion reduces the overall efficiency of a wind turbine. It is therefore desired to improve the aerodynamic performance of the inner airfoil portion.

In view of the aforementioned it is an objective of the present invention to provide an improved wind turbine rotor blade with vortex generators located such that a sufficient aerodynamic performance and, at the same time, a high load bearing can be achieved.

It is a further objective of the present invention to provide an improved wind turbine.

The first objective is solved by a wind turbine rotor blade according to claim 1 and the second objective is solved by a wind turbine according to claim 6. The depending claims define further developments of the present invention.

An inventive wind turbine rotor blade comprises an airfoil having a suction side and a pressure side. The airfoil further comprises an inner airfoil portion and an outer airfoil portion where the inner airfoil portion is comparatively thicker than the outer airfoil portion. In addition, the inner airfoil portion is provided with vortex generators. In the inventive wind turbine rotor blade the thickness of the inner airfoil portion is between 30% and 80% of the inner airfoil portions chord length. The vortex generators are located at the suction side of the inner airfoil portion between 8% and 12% of the chord length, as measured from the leading edge of the airfoil portion.

The inventive wind turbine rotor blade provides an improved stiffness as compared to the state of the art rotor blades with comparable aerodynamic performance of the inner airfoil portion. The high stiffness is achieved by the extreme thickness of the inner airfoil portion which lies between 40 % and 80 % chord length. However, usually, thicker blades are related to lower are aerodynamic performance. In the present invention the lower aerodynamic performance of an extreme thick airfoil portion is overcome by positioning vortex generators on the suction side of the thick inner airfoil portion. Therefore, the combination of the extreme thickness of the inner airfoil portion and the suitably located vortex generators allows for wind turbine rotor blades having a high stiffness in the inner airfoil portion and, at the same time, a satisfactory aerodynamic performance. Up to now, the use of vortex generators for extreme thick blades was unknown. Even in WO 02/08600 A1, where vortex generators are located close to the root, the airfoil portion carrying the vortex generators is not a thick airfoil portion.

A sufficient strength of the wind turbine rotor blades inner airfoil portion can also be achieved with a thickness between 40% and 65% chord length.

To achieve the maximum effect of the vortex generators it is advantageous when vortex generators are present along the whole span of the inner airfoil portion. All vortex generators may be located at the same chord length.

It should be noted, that the use of vortex generators in the outer, thinner airfoil portion shall not be excluded by the invention.

An inventive wind turbine rotor comprises at least one rotor blade according to the invention. In particular all rotor blades of the wind turbine, e.g. all three rotor blades of a three-bladed wind turbine rotor, are rotor blades according to the invention.

Further features, properties and advantages of the present invention will become clear from the following description of embodiments of the invention in conjunction with the accompanying drawings.

In the drawings:
Figure 1 shows a wind turbine rotor blade in a plane view on the plane defined by the blade span and the blade chord.
Figure 2 shows a chord-wise section through the outer airfoil portion of the blade shown in figure 1.
Figure 3 shows a chord-wise section through the inner airfoil portion of the blade shown in figure 1 according to a first embodiment of the invention.
Figure 4 shows a chord-wise section through the inner airfoil portion of the blade shown in figure 1 according to a second embodiment of the invention.
Figure 5 shows a chord-wise section through the airfoil portion of the blade shown in figure 1 according to a third embodiment of the invention.
Figure 6 shows the lift coefficients achieved by the inventive rotor blades as a function of the wind's angle of attack.
Figure 7 shows the drag coefficients of the inventive rotor blades as a function of the wind's angle of attack.

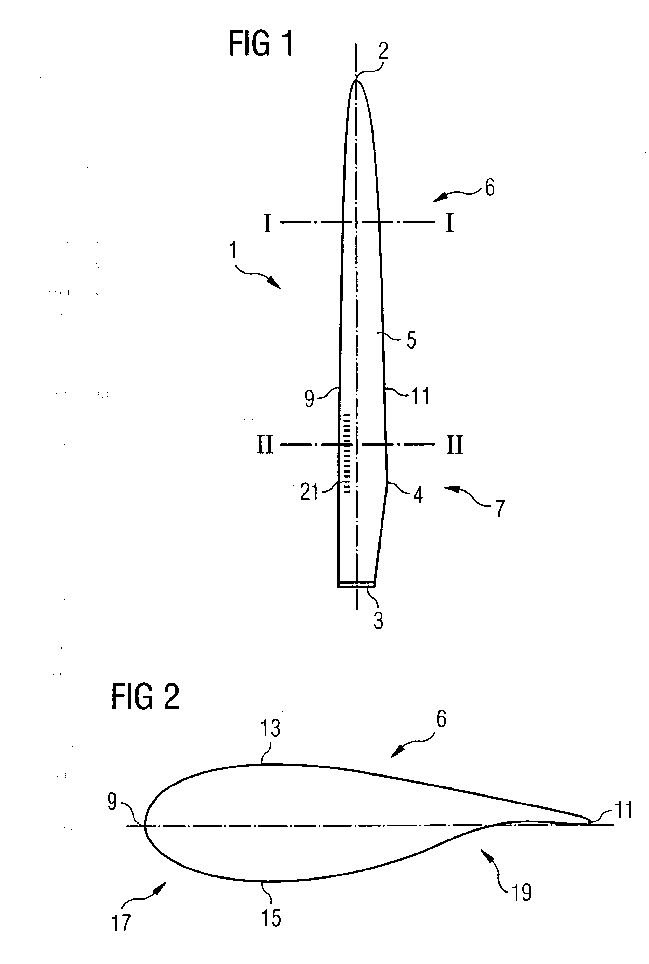

Figure 1 shows a wind turbine blade as it is usually used in a three-blade rotor. However, the present invention shall not be limited to blades for three-blade rotors. In fact, it may as well be implemented in other rotors like one-blade rotors or two-blade rotors, or even in rotors with more than three blades.

The rotor blade 1 shown in figure 1 comprises a root portion 3 with a cylindrical profile, and a tip 2 which forms the outermost part of the blade. The cylindrical profile of the root portion 3 serves to fix the blade 1 to a bearing of a rotor hub. The rotor blade 1 further comprises a so-called shoulder 4 which is defined as being the location of the blades maximum profile depth, i.e. its maximum chord length.

The airfoil 5 extends along the so called span (dash dotted line in Fig. 1) between the root portion 3 and the tip 2. It can be notionally subdivided into an outer, thin airfoil portion 6 and an inner, thick airfoil portion 7. As the border between the thin airfoil portion and the thick airfoil portion is not commonly defined, the present invention regards an airfoil portion as to be thick if the ratio of its thickness to the chord length is above 30%.

A chord-wise cross-section through the rotor blades thin airfoil portion 6 along the line I-I is shown in figure 2. The aerodynamic profile of the airfoil portion shown in figure 2 comprises a convex suction side 13 and a less convex pressure side 15. The dash-dotted line extending from the blades leading edge 9 to its trailing edge 11 shows the chord of the profile. Although the pressure side 15 comprises a convex section 17 and a concave section 19 in figure 2, it may be implemented without a concave section at all as long as the suction side 13 is more convex than the pressure side 15.

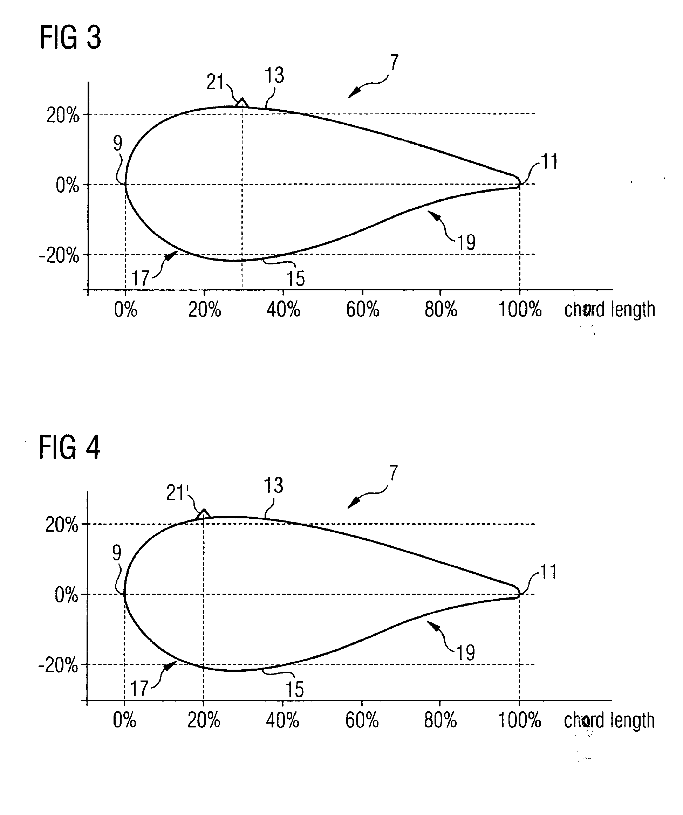

A chord-wise cross-section through the rotor blades thick airfoil portion 7 along the line II-II in figure 1 is shown in figure 3 for a first embodiment of the invention. The general shape of the thick airfoil portions cross-section corresponds to the general shape of the thin airfoil portions cross-section and will therefore not be described in detail again. In addition, elements of the cross-section shown in figure 3 corresponding to elements shown in the cross-section of figure 2 are designated with the same reference numerals.

The main difference between the cross-section of the thick airfoil portion shown in figure 3 and the cross-section of the thin airfoil portion shown in figure 2 is that the ratio between the highest thickness of the profile, as defined as to the longest straight line from the suction side 13 to the pressure side 15 perpendicular to the chord, and the chord length of the profile is above 30% whereas the respective ratio of the profile shown in figure 2 is below 30%.

Also shown in the thick airfoil portion's cross-section according to the first embodiment is a vortex generator 21 which is located at the suction side 13 between 25 and 30 % chord length, as measured from the leading edge 9.

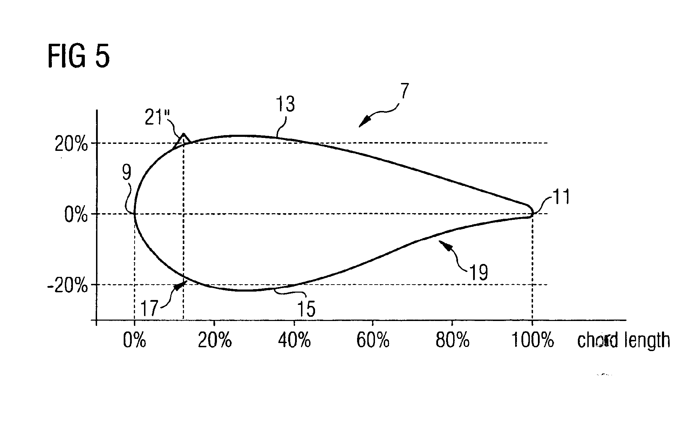

Alternative locations of the vortex generators 21', 21" on the suction side 13 of the thick airfoil portion are shown in figures 4 and 5. Except for the location of the vortex generators, the shape of the cross-sections shown in figures 3 to 5 are identical. In the cross-section shown in figure 4, the vortex generator 21' is located at about 18 % to 22 % chord length whereas the vortex generator 21" in the cross-section shown in figure 5 is located between 8% and 12% chord length.

It should be noted that the optimum position of the vortex generator may vary depending on the thickness to chord length ratio of the profile as well as on the overall shape of the cross-section. However, it is advantageous if the vortex generator lies in the range between 5% and 30% of the chord length for thick airfoil portions with a ratio of thickness to chord length in the range between 30% and 80% and in particular for ratios in the range between 40% and 65%.

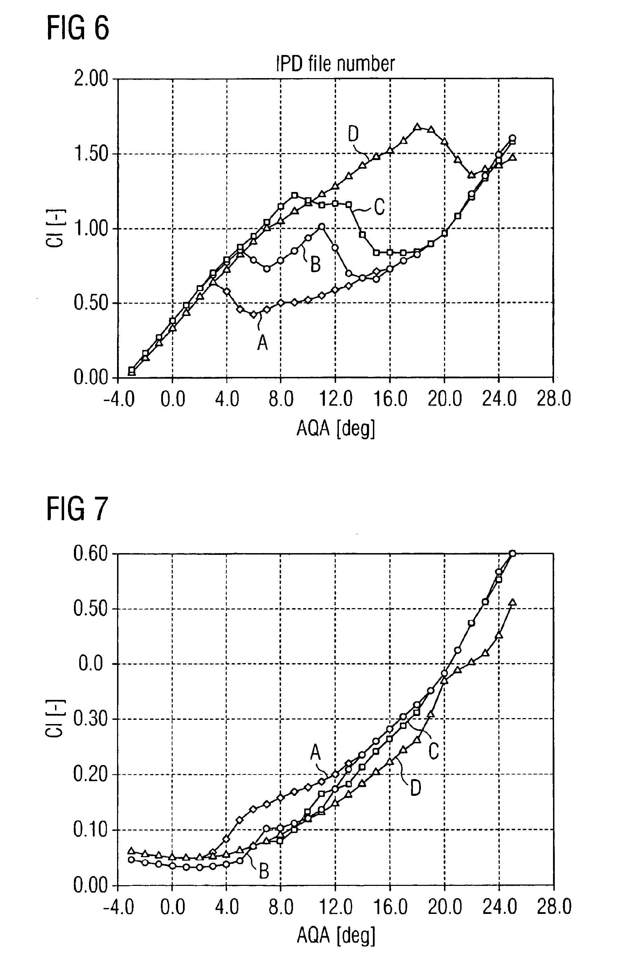

The influence of the vortex generators 21, 21', 21''' at the locations shown in figures 3 to 5 on the lift of the wind turbine blade 1 is shown in figure 6. The figure shows the lift coefficient c₁ of the turbine blade 1 as a function of the angle of attack (AOA) of the wind, i.e. the angle between the chord and the relative wind seen from leading edge 9 of the rotor blade 1. In general, a higher lift coefficient increases the efficiency of the turbine blade.

The line denoted by A is the result of a lift coefficient measurement for a wind turbine blade without any vortex generators. The lines designated by B, C and D show the results of turbine blades having vortex generators at the suction side of the thick airfoil portion at the locations shown in figure 3(B), in figure 4(C) and in figure 5(D). Except for the presence and the location of the vortex generators, respectively, all four turbine blades are identical.

It can be easily seen from figure 6 that the presence of the vortex generators in the thick airfoil portion increases the lift coefficient as soon as the wind angle of attack is higher than about 3 degree. With higher angles of attack the lift coefficients of the different wind turbine rotor blades merge again. For the rotor blade B having vortex generators as shown in figure 3 the lift coefficient c₁ is more or less identical with the rotor blade A without any vortex generators for angles of attack greater than about 15 degree. For wind turbine rotor blades C having vortex generators at the location shown in figure 4 the lift coefficient c₁ is more or less identical with the rotor blade A without vortex generators for angles of attack higher than about 18 degree. With the vortex generators in the location shown in figure 5 the lift coefficient c₁ of the wind turbine rotor blade is significantly higher than the lift coefficient of the rotor blade A without vortex generators in a broad range of angle of attack, namely between about 3 degrees and 23 degree. Therefore, blade D represents a particularly advantageous embodiment of the invention.

As a general trend it can be noted that the maximum lift coefficient of the blade moves towards higher angles of attack as the location of the vortex generators moves towards the leading edge of the profile. Moreover, the maximum value of the lift coefficient c₁ increases accordingly.

Figure 7 shows the drag coefficient c_{d} for the four blades shown in figure 6. The differences in the drag coefficient c_{d} between the four turbine blades A, B, C, D are less prominent than the differences between the lift coefficients c₁. While the lift coefficients c₁ differ strongly between the different blades in the range from 3 degree AOA to the range of 23 degree AOA larger differences between the drag coefficients of the blades can only be seen from about 3 degree AOA to about 12 degree AOA. The reduction of drag in this range for the rotor blades with vortex generators results from a delay in stall caused by the vortex generators.

Based on the differences in the lift coefficients c₁ and the drag coefficient c_{d} for the different vortex generator configurations shown in figures 3 to 5 an annual energy production (AEP) has been calculated. Compared to the turbine blade without vortex generators (blade A) the annual energy production can be increased by almost one percent for the vortex generator configuration shown in figure 3, by almost 1.5 percent for the vortex generator configuration shown in figure 4 and by more than 1.7 percent for the vortex generator configuration shown in figure 5.

Although the main advantage of the vortex generators is an improved energy production, other advantages are achievable, too. The drop of lift, as represented by the drop of the lift coefficient c₁ in figure 6, has importance for the loads on the tower. By moving the drop to other angles of attack it is possible to influence the dynamical loading of the tower. Furthermore, by delay in stall, as has been discussed with reference to figure 7, the noise produced by the rotor may be reduced.

## Claims

1. A wind turbine rotor blade (1) with an airfoil (5) having a suction side (13) and a pressure side (15), the airfoil (5) comprising an inner airfoil portion (7) and an outer airfoil portion (6), where the inner airfoil portion (7) is comparatively thicker than the outer airfoil portion (6), the thickness of the inner airfoil portion (7) being between 30% and 80% of the inner airfoil portion's (7) chord length, and the inner airfoil portion (7) is provided with vortex generators (21, 21', 21"),
**characterised**
**in that** the vortex generators (21, 21', 21") are located at the suction side (13) of the inner airfoil portion (7) between 8% and 12% of the chord length, as measured from the leading edge (9) of the airfoil portion (7).

2. The wind turbine rotor blade (1) as claimed in claim 1, **characterised in that** the thickness of the inner airfoil portion (7) is between 40% and 65% of the chord length.

3. The wind turbine rotor blade (1) as claimed in any of the preceding claims, **characterised in that** all vortex generators are located at the same chord length.

4. The wind turbine rotor blade (1) as claimed in any of the preceding claims, **characterised in that** vortex generators are present along the whole span of the inner airfoil portion (7).

5. Wind turbine with at least one rotor blade (1) according to any of the preceding claims.

## Patentansprüche

1. Windturbinenrotorblatt (1) mit einem Profil (Airfoil) (5), das eine Saugseite (13) und eine Druckseite (15) aufweist, wobei das Profil (5) einen inneren Profilabschnitt (7) und einen äußeren Profilabschnitt (6) umfasst, wobei der innere Profilabschnitt (7) vergleichsweise dicker als der äußere Profilabschnitt (6) ist, wobei die Dicke des inneren Profilabschnitts (7) zwischen 30 % und 80 % der Sehnenlänge des inneren Profilabschnitts (7) beträgt und der innere Profilabschnitt (7) mit Wirbelerzeugern (21, 21', 21") versehen ist,
**dadurch gekennzeichnet,**
**dass** die Wirbelerzeuger (21, 21', 21") auf der Saugseite (13) des inneren Profilabschnitts (7) zwischen 8 % und 12 % der Sehnenlänge angeordnet sind, von der Vorderkante (9) des Profilabschnitts (7) aus gemessen.

2. Windturbinenrotorblatt (1) nach Anspruch 1, **dadurch gekennzeichnet, dass** die Dicke des inneren Profilabschnitts (7) zwischen 40 % und 65 % der Sehnenlänge beträgt.

3. Windturbinenrotorblatt (1) nach einem der vorhergehenden Ansprüche, **dadurch gekennzeichnet, dass** alle Wirbelerzeuger bei derselben Sehnenlänge angeordnet sind.

4. Windturbinenrotorblatt (1) nach einem der vorhergehenden Ansprüche, **dadurch gekennzeichnet, dass** Wirbelerzeuger entlang der gesamten Spannweite des inneren Profilabschnitts (7) vorhanden sind.

5. Windturbine mit mindestens einem Rotorblatt (1) nach einem der vorhergehenden Ansprüche.

## Revendications

1. Aube (1) de rotor d'éolienne avec une surface portante (5) ayant un côté d'aspiration (13) et un côté de pression (15), la surface portante (5) comprenant une partie intérieure (7) de surface portante et une partie extérieure (6) de surface portante, où la partie intérieure (7) de surface portante est comparativement plus épaisse que la partie extérieure (6) de surface portante, l'épaisseur de la partie intérieure (7) de surface portante étant entre 30% et 80% de la longueur de corde de la partie intérieure (7) de surface portante, et la partie intérieure (7) de surface portante est prévue avec des générateurs de tourbillons (21, 21', 21"),
**caractérisée**
**en ce que** les générateurs de tourbillons (21, 21', 21") sont situés sur le côté d'aspiration (13) de la partie intérieure (7) de surface portante entre 8% et 12% de la longueur de corde, mesurée à partir du bord d'attaque (9) de la partie (7) de surface portante.

2. Aube (1) de rotor d'éolienne selon la revendication 1, **caractérisée en ce que** l'épaisseur de la partie intérieure (7) de surface portante est entre 40% et 65% de la longueur de corde.

3. Aube (1) de rotor d'éolienne selon l'une quelconque des revendications précédentes, **caractérisée en ce que** tous les générateurs de tourbillons sont situés sur la même longueur de corde.

4. Aube (1) de rotor d'éolienne selon l'une quelconque des revendications précédentes, **caractérisée en ce que** les générateurs de tourbillons sont présents sur la totalité de la portée de la partie intérieure (7) de surface portante.

5. Éolienne avec au moins une aube (1) de rotor selon l'une quelconque des revendications précédentes.
